# EUROPÄISCHE PATENTANMELDUNG

(11) **EP 4 752 002 A1**
(43) Veröffentlichungstag der Anmeldung: **03.06.2026**
(21) Anmeldenummer: 25218805.7
(22) Anmeldetag: 26.11.2025
(51) Int. Cl.: B60R 3/00, B60R 3/02

(54) **FAHRZEUGANHÄNGER MIT AUFSTIEGSHILFE**

(30) Priorität: 02.12.2024 DE 202024106989 U
(71) Anmelder: System Trailers Fahrzeugbau GmbH, 49767 Twist (DE)
(72) Erfinder: Saatkamp, Ralf, 49808 Lingen (DE)
(74) Vertreter: Patentanwälte Olbricht Buchhold Keulertz

(57) **Zusammenfassung**

Bei einem Fahrzeuganhänger, mit einem Ladeboden (18) sowie mit einer Leiter (1), die tiefer als der Ladeboden (18) an einem Randabschnitt des Ladebodens (18) angeordnet ist, schlägt die Erfindung vor, dass die Leiter (1) eine bewegliche Aufstiegshilfe (6) aufweist, wobei die Aufstiegshilfe (6) einen Griff (9) aufweist, der zwischen einer Ruhestellung unterhalb des Ladebodens (18) und einer über den Ladeboden (18) hinaus nach oben ragenden Gebrauchsstellung um eine Schwenkachse beweglich ist, und die Schwenkachse im Wesentlichen quer zu dem Randabschnitt des Ladebodens (18) verläuft.

## Beschreibung

Die Erfindung betrifft einen Fahrzeuganhänger mit einem Ladeboden sowie mit einer Leiter, die tiefer als der Ladeboden an einem Randabschnitt des Ladebodens angeordnet ist.

Aus der Praxis sind Fahrzeuganhänger bekannt, deren Ladeböden sich in einem Abstand von 1 m oder höher über Grund befinden, beispielsweise oberhalb der Straße, auf welcher der Fahrzeuganhänger steht. Um den Zugang auf den Ladeboden zu erleichtern, weisen die bekannten Fahrzeuganhänger jeweils eine fest am Anhänger installierte Leiter auf, die tiefer als der Ladeboden angeordnet ist und mehrere Sprossen aufweist, die zwischen zwei Holmen montiert sind. Die Leitern sind an einem Randabschnitt des Ladebodens angeordnet, beispielsweise hängen sie von einem Außenrahmen des jeweiligen Ladebodens herab nach unten. Als Außenrahmen wird in der Praxis ein Verstärkungsprofil bezeichnet, das an der Seitenkante des Ladebodens und daher in Längsrichtung des Fahrzeuganhängers verläuft. Am Heck des Ladebodens sind die beiden Außenrahmen durch einen so genannten Heckrahmen miteinander verbunden, der quer zur Längsrichtung des Fahrzeuganhängers verläuft.

Beim Betreten der Leiter von der Straße aus bietet zunächst der obere Bereich der Leiter und/oder der Außenrahmen des Ladebodens eine Aufstiegshilfe, an welcher sich eine Person festhalten kann. Je höher die Person auf der Leiter steigt, desto weniger können die genannten Elemente des Fahrzeuganhängers als Aufstiegshilfe genutzt werden. Auch wenn vom Ladeboden aus die Leiter bestiegen werden soll, fehlen Hilfsmittel, die bei diesem Bewegungsablauf als Abstiegshilfe bezeichnet werden können und an der sich eine Person festhalten kann, wenn sie die oberen Sprossen der Leiter betreten möchte oder sich auf diesen befindet. Aus der Praxis sind daher Stangen bekannt, die Öffnungen des Ladebodens eingesteckt werden können und somit als Aufstiegshilfe genutzt werden können. Diese Stangen erfordern eine umständliche Bedienung und müssen in die Öffnungen eingesetzt oder aus den Öffnungen entnommen werden und, wenn sie sich nicht in den Öffnungen befinden, als frei bewegliche Elemente entsprechend den Ansprüchen an die Ladungssicherung abgelegt und gesichert werden, um Unfallgefahren auszuschließen.

Der Erfindung liegt die Aufgabe zugrunde, einen gattungsgemäßen Fahrzeuganhänger dahingehend zu verbessern, dass dieser sowohl während einer Benutzung der Leiter als auch bei Nichtgebrauch der Leiter ein hohes Maß an Unfallsicherheit bietet sowie eine unkomplizierte Handhabung der Leiter ermöglicht.

Erfindungsgemäße Merkmale sind in Anspruch 1 angegeben. Ausgestaltungen sind Gegenstand der Unteransprüche.

Die Erfindung schlägt mit anderen Worten vor, dass die Leiter eine bewegliche Aufstiegshilfe aufweist. Die Aufstiegshilfe stellt somit kein separates Bauteil da, sondern einen Bestandteil der Leiter. Die Aufstiegshilfe weist erfindungsgemäß einen beweglichen und z. B. länglichen Griff auf, der schwenkbeweglich gelagert ist und zwischen einer nach unten hängenden Ruhestellung und einer nach oben ragenden Gebrauchsstellung um eine Schwenkachse beweglich ist. In seiner Gebrauchsstellung ragt der Griff über den Ladeboden nach oben hinaus. Eine Person kann den länglichen Griff beim Auf- oder Absteigen von der Leiter erfassen, wenn der Griff in seiner Gebrauchsstellung über den Ladeboden hinaus nach oben ragt.

In der Ruhestellung hängt der Griff nach unten, und da die Leiter tiefer als der Ladeboden angeordnet ist, ragt auch der Griff in seiner Ruhestellung nicht über den Ladeboden hinaus nach oben, so dass der Ladeboden ohne Einschränkungen genutzt werden kann und auch bewegliche Seitenwände, die z.B. aus einer Lkw Plane bestehen können, oder bewegliche Hecktüren des Fahrzeuganhängers problemlos bedient und bewegt werden können, ohne dass durch den Griff derartige Bewegungen behindert werden. Durch die Schwenkbeweglichkeit des Griffes verbleibt dieser in seinen beiden Ruhe- und Gebrauchsstellungen fest am Fahrzeug, so dass der Aufwand zum Verstauen und zum Sichern eines losen Elements vermieden wird.

Erfindungsgemäß verläuft die Schwenkachse im Wesentlichen quer zu dem Randabschnitt des Ladebodens, an welchem die Leiter angeordnet ist. Wenn sich die Leiter an einer Seite des Fahrzeuganhängers befindet, wo beispielsweise ein Außenrahmen am Rand des Ladebodens verläuft und die Leiter unter dem Außenrahmen hängt, verläuft die Schwenkachse im Wesentlichen quer zur Fahrzeuglängsachse. Wenn sich die Leiter am Heck des Fahrzeuganhängers befindet, beispielsweise unter dem Heckrahmen, verläuft die Schwenkachse im Wesentlichen in Längsrichtung des Fahrzeuganhängers. Bei Benutzung der Leiter und der Aufstiegshilfe wird durch diese jeweilige Lage der Schwenkachse von einer die Leiter benutzenden Person eine Kraft auf die Aufstiegshilfe ausgeübt, die in der Schwenkrichtung der Aufstiegshilfe im Wesentlichen momentenfrei ist. Vielmehr wirkt diese Kraft im Wesentlichen parallel zur Schwenkachse, so dass erstens die Aufstiegshilfe optimal gegen derartige Kräfte abgestützt ist und zweitens die Aufstiegshilfe in ihrer Gebrauchsstellung, mit konstruktiv einfachen Mitteln gegen unbeabsichtigte Schwenkbewegungen gesichert werden kann.

Grundsätzlich kann die Aufstiegshilfe frei beweglich sein. Wenn beispielsweise zwei Aufstiegshilfen beiderseits der Leiter angeordnet sind und deren Griffe symmetrisch aufeinander zu geschwenkt werden, um sie in ihre Gebrauchsstellung zu bringen, kann diese Schwenkbewegung jeweils durch einen Anschlag begrenzt sein. Bei Benutzung der Leiter werden die Griffe der beiden Aufstiegshilfen erwartungsgemäß auch mit einem Kraftvektor belastet, der die Griffe aufeinander zu zu bewegen bestrebt ist, so dass die beiden Aufstiegshilfen gegen ihre Anschläge gedrängt und dort gehalten werden. In einer Ausgestaltung ist die Aufstiegshilfe in ihrer Gebrauchsstellung jedoch verriegelbar, wodurch die Sicherheit bei Benutzung der Aufstiegshilfe verbessert wird. Die Riegelmittel müssen aufgrund der oben beschrieben Kräfteverhältnisse nicht dazu eingerichtet sein, große Kräfte oder Momente aufzunehmen. Dementsprechend können die Riegelmittel kleine bauliche Abmessungen aufweisen, und sie können so ausgestaltet sein, dass sie mit geringem Kraftaufwand betätigt werden können, was eine unkomplizierte Handhabung der Aufstiegshilfe unterstützt.

Der Griff kann unterschiedlich geformt sein, beispielsweise in Form eines länglichen, zu einer geschlossenen Schlaufe gebogenen Bügels. In einer Ausgestaltung ist der Griff stangenförmig ausgestaltet, so dass er besonders wirtschaftlich aus handelsüblichem Halbzeug geschaffen werden kann. Der stangenförmige Griff kann beispielsweise als Stange aus einem Vollmaterial bestehen. Oder er kann als Rohr mit einem geschlossenen Querschnitt ausgestaltet sein, beispielsweise als Rundrohr mit kreisrundem Querschnitt oder als Vierkantrohr mit rechteckigem, gegebenenfalls quadratischem Querschnitt. Oder der stangenförmige Griff kann als Profilschiene ausgestaltet sein, beispielsweise mit einem **T-** oder einem im Vergleich dazu grifffreundlicheren U-Profil.

Der Griff kann als festes Bauteil eine unveränderliche Gestalt aufweisen und lediglich durch seine Schwenkbewegung veränderlich sein. **In** einer Ausgestaltung weist der Griff jedoch zwei Abschnitte auf, die relativ zueinander beweglich sind, so dass sie in eine erste, kürzere Anordnung und in eine zweite, längere Anordnung gebracht werden können. Der Griff kann beispielsweise in die kürzere Anordnung gebracht werden, wenn er in seine Ruhestellung geschwenkt wird, so dass die nach unten ragende Länge des Griffs vergleichsweise kurz bemessen ist und ein Kontakt des Griffs mit dem Untergrund auch beim Überfahren von Hindernissen wie Straßenunebenheiten ausgeschlossen ist, so dass Beschädigungen der Aufstiegshilfe vermieden werden. Wenn der Griff in seine Gebrauchsstellung geschwenkt wird, können seine beiden Abschnitte hingegen in ihre zweite, längere Anordnung gebracht werden, so dass der Griff möglichst hoch über den Ladeboden hinaus nach oben ragt und damit eine optimale Hilfestellung als Aufstiegshilfe bieten kann. Der Griff kann vorteilhaft so lang bemessen sein und sich so hoch über den Ladeboden erstrecken, dass er problemlos auch dann noch erfasst werden kann, wenn sich eine Person auf der obersten Sprosse der Leiter befindet. Insbesondere vorteilhaft kann der Griff in seiner Gebrauchsstellung so lang bemessen sein, dass er auch dann erfasst werden kann, wenn sich eine Person auf dem Ladeboden befindet. So dient er nicht nur beim Verlassen der Leiter nach dem Aufstieg noch als Sicherheitselement, sondern kann auch beim Abstieg von dem Ladeboden bereits vor dem Betreten der Leiter als Sicherheitselement erfasst werden, bevor eine Person vom Ladeboden auf die oberste Sprosse der Leiter tritt.

Um die beiden Abschnitte des Griffs in die beiden unterschiedlich langen Anordnungen verbringen zu können, können sie beispielsweise um ein Schwenklager bewegt werden und aneinander geklappt werden, um die erste, kürzere Anordnung zu schaffen. Aus dieser nebeneinander verlaufenden ersten, kürzeren Anordnung können die beiden Abschnitte auseinandergeklappt werden, so dass sie nun in Längsrichtung miteinander fluchten und einen dementsprechend langen Griff bilden. Wenn der Griff als Profilschiene ausgestaltet ist, können seine beiden Abschnitte ebenfalls um ein Schwenklager bewegt werden und platzsparend ineinander eintauchen, wenn sie in ihre erste, kürzere Anordnung gebracht werden. **In** einer Ausgestaltung ist der Griff teleskopierbar ausgestaltet, so dass er zwischen einer ineinandergeschobenen, ersten Anordnung und einer im Vergleich dazu längeren, auseinandergezogenen Anordnung beweglich ist. Die Teleskopierbarkeit ermöglicht eine geschützte Anordnung des inneren Abschnitts und vermeidet freiliegende, von außen zugängliche Mechanismen wie z.B. ein Schwenklager, wenn sich der Griff in seiner Ruhestellung befindet. Da sich der Griff während des Fahrbetriebs in seiner Ruhestellung befindet, werden Verschmutzungen und aggressive Chemikalien wie z.B. Streusalz aufgewirbelt, so dass die geschützte Anordnung des inneren Abschnitts eines teleskopierbaren Griffs eine möglichst störungsfreie Funktion des Griffs sicherstellt, um dessen beiden Abschnitte in die erste oder in die zweite Anordnung verbringen zu können.

Die Aufstiegshilfe ist in ihrer Gebrauchsstellung verriegelbar, wie oben beschrieben. In ihrer Ruhestellung hängt die Aufstiegshilfe aufgrund der Schwerkraft automatisch nach unten, so dass sie bestrebt ist, diese Ruhestellung automatisch beizubehalten und grundsätzlich nicht in der Ruhestellung verriegelt zu werden braucht. In einer Ausgestaltung ist die Aufstiegshilfe jedoch auch in ihrer Ruhestellung verriegelbar. Hierdurch werden unkontrollierte Bewegungen der Aufstiegshilfe während der Fahrt verhindert, welche entweder die Mechanik der schwenkbeweglich in Aufstiegshilfe belasten könnten und/oder welche zu unerwünschten Klappergeräuschen führen könnten. Durch die Verriegelbarkeit ist es zudem nicht erforderlich, separate Sicherungselemente zu verwenden wie z.B. Gurte oder dergleichen, um unerwünschte Bewegungen der Aufstiegshilfe während der Fahrt zu unterbinden. Derartige separate Sicherungselemente müssten bei Nichtgebrauch verliersicher aufbewahrt werden und bergen im Gebrauch die Gefahr, dass sie sich während der Fahrt lösen können.

Die Aufstiegshilfe kann so geformt sein und/oder die Schwenkachse ihres Schwenklagers kann in der Art schräg ausgerichtet sein, dass die Aufstiegshilfe sich in ihrer Ruhestellung unter dem Ladeboden befindet, ohne über den Rand des Ladebodens nach außen hinaus zu tragen, je nach Montageort der Leiter zur Seite oder nach hinten über den Ladeboden hinaus. In einer Ausgestaltung ist die Aufstiegshilfe jedoch in Längsrichtung ihrer Schwenkachse beweglich, und dabei ist die Aufstiegshilfe dazu eingerichtet, in ihrer Ruhestellung unterhalb des Ladebodens angeordnet zu sein und in ihrer Gebrauchsstellung außerhalb des Ladebodens nach oben zu haben. Da sich die Aufstiegshilfe während der Fahrt in ihrer Ruhestellung befindet, vergrößert sie in diesem Zustand die Fahrzeugabmessungen nicht. Beim Be- und Entladen des Fahrzeuganhängers oder zu Kontrollzwecken hingegen, wenn die Leiter benutzt und die Aufstiegshilfe benötigt wird, steht um den Fahrzeuganhängers herum ausreichend Platz zur Verfügung, so dass die Aufstiegshilfe sich in ihrer Gebrauchsstellung außerhalb des Umfangs des Ladebodens befinden kann.

Die Erfindung betrifft einen Fahrzeuganhänger, mit einem Ladeboden sowie mit einer Leiter, die tiefer als der Ladeboden an einem Randabschnitt des Ladebodens angeordnet ist, und der dadurch gekennzeichnet ist, dass die Leiter eine bewegliche Aufstiegshilfe aufweist, wobei die Aufstiegshilfe einen Griff aufweist, der zwischen einer Ruhestellung unterhalb des Ladebodens und einer über den Ladeboden hinaus nach oben ragenden Gebrauchsstellung um eine Schwenkachse beweglich ist, und die Schwenkachse im Wesentlichen quer zum Randabschnitt des Ladebodens verläuft.

Eine Ausgestaltung des Fahrzeuganhängers ist dadurch gekennzeichnet, dass die Aufstiegshilfe in ihrer Gebrauchsstellung verriegelbar ist.

Eine Ausgestaltung des Fahrzeuganhängers ist dadurch gekennzeichnet, dass der Griff stangenförmig ausgestaltet ist.

Eine Ausgestaltung des Fahrzeuganhängers ist dadurch gekennzeichnet, dass der Griff zwei Abschnitte aufweist, die zwischen einer ersten, kürzeren Anordnung und einer im Vergleich dazu längeren, zweiten Anordnung relativ zueinander beweglich sind.

Eine Ausgestaltung des zuletzt beschriebenen Fahrzeuganhängers ist dadurch gekennzeichnet, dass der Griff teleskopierbar in der Art ausgestaltet ist, dass die beiden Abschnitte zwischen einer ineinandergeschobenen, ersten Anordnung und einer im Vergleich dazu längeren, auseinandergezogenen Anordnung beweglich sind.

Eine Ausgestaltung des Fahrzeuganhängers ist dadurch gekennzeichnet, dass die Aufstiegshilfe auch in ihrer Ruhestellung verriegelbar ist.

Eine Ausgestaltung des Fahrzeuganhängers ist dadurch gekennzeichnet, dass die Aufstiegshilfe in Längsrichtung ihrer Schwenkachse beweglich ist und dazu eingerichtet ist, in Ihrer Ruhestellung unterhalb des Ladebodens angeordnet zu sein und in ihrer Gebrauchsstellung außerhalb des Ladebodens nach oben zu verlaufen.

Eine Ausgestaltung des Fahrzeuganhängers ist dadurch gekennzeichnet, dass beiderseits der Leiter jeweils eine Aufstiegshilfe angeordnet ist.

Eine Ausgestaltung des Fahrzeuganhängers ist dadurch gekennzeichnet, dass der Griff in eine nach unten hängende Ruhestellung beweglich ist.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Frontalansicht auf eine Leiter eines Fahrzeuganhängers, die zwei Aufstiegshilfen aufweist,
- Fig. 2: eine Draufsicht auf die Leiter von Fig. 1,
- Fig. 3: eine Seitenansicht aus auf die in Fig. 1 links dargestellte Seite der Leiter, mit ausgeklappter Aufstiegshilfe, und
- Fig. 4: eine Seitenansicht aus auf die in Fig. 1 rechts dargestellte Seite der Leiter, mit eingeklappter Aufstiegshilfe.

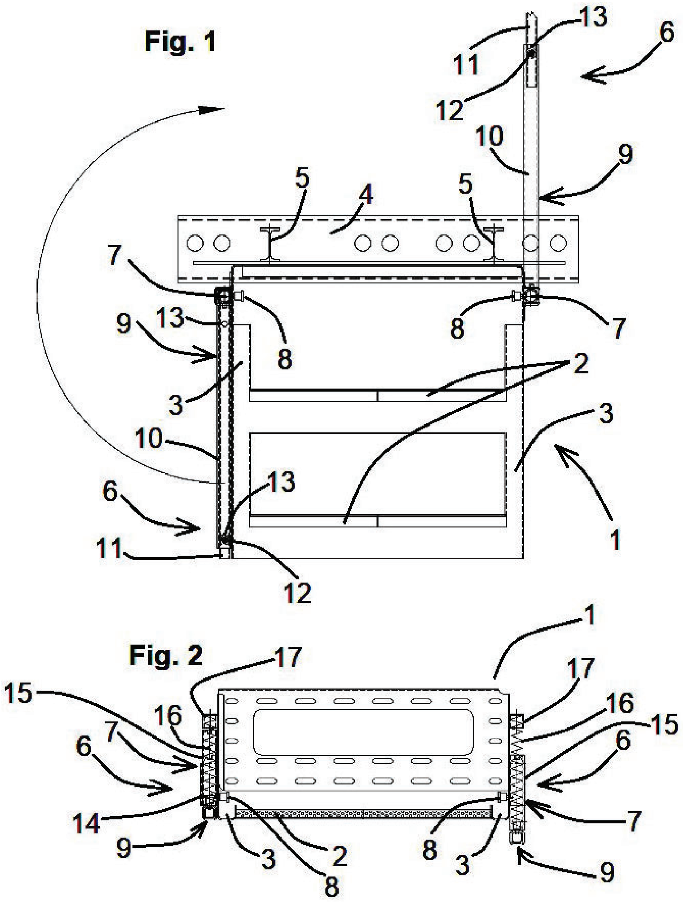

Fig. 1 zeigt eine Leiter 1, die zwei im Abstand übereinander angeordnete horizontale Sprossen 2 aufweist sowie zwei im Abstand nebeneinander angeordnete vertikale Holme 3, zwischen denen sich die Sprossen 2 erstrecken. Die Leiter 1 befindet sich an einem Seitenrand eines Ladebodens eines Fahrzeuganhängers, wobei Fig. 1 einen Randabschnitt zeigt, wo die Leiter 1 unterhalb eines Außenrahmens 4 des Fahrzeuganhängers angeordnet ist. Der Außenrahmen 4 trägt den Ladeboden und ist nur ausschnittsweise dargestellt. Zwei Traversen 5 erstrecken sich von dem Außenrahmen 4 zur Fahrzeugmitte hin und zu einem gegenüberliegenden Außenrahmen 4 auf der anderen Längsseite des Ladebodens.

Die Leiter 1 weist an ihren beiden Seiten, jeweils seitlich außen neben dem jeweiligen Holm 3, zwei Aufstiegshilfen 6 auf, von denen im Bild linke Aufstiegshilfe 6 in ihrer nach unten hängenden Ruhestellung dargestellt ist und die im Bild rechte Aufstiegshilfe 6 in ihrer Gebrauchsstellung, in der sie über den Außenrahmen und somit über den Ladeboden nach oben hinaus ragt. Die Bewegung jeder Aufstiegshilfe 6 zwischen ihrer jeweiligen Ruhe- und ihrer jeweiligen Gebrauchsstellung erfolgt um ein Schwenklager 7, dessen Schwenkachse parallel zu den Traversen 5 und somit senkrecht zur Bildebene verläuft. Links im Bild ist die Schwenkbewegung, in welcher die Aufstiegshilfe 6 aus ihrer dargestellten Ruhestellung in ihre Gebrauchsstellung geschwenkt werden kann, durch einen kreisbogenförmigen Pfeil verdeutlicht. Mittels eines Federschnappers 8, der sich bei dem dargestellten Ausführungsbeispiel entsprechend der Schwenkbewegung der Aufstiegshilfe 6 in dem Schwenklager 7 um die Schwenkachse dreht, können die beiden Aufstiegshilfen 6 in ihrer jeweiligen Ruhestellung und in ihrer jeweiligen Gebrauchsstellung verriegelt werden, indem ein federbelasteter Stift in eine zugeordnete Bohrung eines Lagerbolzens eingreift, der sich entsprechend der Schwenkbewegung der Aufstiegshilfe 6 in dem Schwenklager um die Schwenkachse dreht. Der Federschnapper 8 kann fest auf der Innenseite der Leiter 1 montiert sein und sich nicht um die Schwenkachse drehen, wobei sich zum Zusammenwirken mit dem Federschnapper 8 zwei Bohrungen in der Aufstiegshilfe 6 befinden: Eine für die untere Ruhestellung und eine weitere Bohrung für die obere Gebrauchsstellung.

Die beiden Aufstiegshilfen 6 weisen jeweils einen stangenförmigen Griff 9 auf, der teleskopierbar und somit in seiner Länge verstellbar ist. Der Griff 9 weist hierzu einen äußeren, rohrförmigen Abschnitt 10 auf sowie einen inneren Abschnitt 11, der in dem äußeren Abschnitt 10 längsverschiebbar geführt ist. Bei der im Bild links dargestellten Aufstiegshilfe 6, die sich in ihrer Ruhestellung befindet, sind die beiden Abschnitte 10 und 11 ineinander geschoben und befinden sich in einer ersten, kürzeren Anordnung. Bei der im Bild rechts dargestellten Aufstiegshilfe 6, die sich in ihrer Gebrauchsstellung befindet, sind die beiden Abschnitte 10 und 11 auseinander gezogen und befinden sich in einer zweiten, längeren Anordnung, so dass sie möglichst hoch über den Ladeboden hinausragen. Die beiden Abschnitte 10 und 11 können in den beiden dargestellten Anordnungen, die eine unterschiedliche Länge des Griffs 9 bewirken, arretiert werden mittels eines federbelasteten Riegelbolzens 12, der sich an dem äußeren Abschnitt 10 befindet und jeweils in eine von zwei Bohrungen 13 eingreift, die der innere Abschnitt 11 aufweist.

Fig. 2 zeigt eine Draufsicht auf die Leiter 1, wobei die beiden Aufstiegshilfen 6 wie in Fig. 1 links in ihrer Ruhestellung und rechts in ihrer Gebrauchsstellung dargestellt sind. Dabei ist ersichtlich, dass in ihrer Gebrauchsstellung der Griff 9 vor die Sprossen 2 der Leiter 1 vorsteht, so dass er, wenn die Leiter 1 gemäß Fig. 1 unterhalb eines Außenrahmens 4 angeordnet ist, seitlich neben und außerhalb des Außenrahmens 4 nach oben ragt. Bei der linken Aufstiegshilfe 6 ist erkennbar, dass in einem äußeren, rohrförmigen Gehäuse 14 des Schwenklagers 7 eine längere Hülse 15 geführt ist, die mit dem Griff 9 verbunden ist. Eine Feder 16 verbindet die längere Hülse 15 mit einer kürzeren Hülse, die als Hülsenboden 17 bezeichnet ist.

Nach Lösen des Federschnapppers 8 kann der Griff 9 mitsamt der längeren Hülse 15 in Längsrichtung des Schwenklagers 7 und somit in Längsrichtung des Gehäuses 14 gezogen werden, gemäß Fig. 2 in der nach unten dargestellten Richtung. Die Feder 16 ist bei dem dargestellten Ausführungsbeispiel als Druckfeder ausgestaltet. Dadurch wird das Hochklappen des Griffs 9 unterstützt. Wenn sich der Griff so weit vor den Sprossen 2 der Leiter 1 befindet, dass er bei der Schwenkbewegung nicht mit den Sprossen 2 oder dem benachbarten Holm 3 kollidiert, kann er in seine Gebrauchsstellung geschwenkt und dort mittels des Federschnapppers 8 wiederum verriegelt werden. Bei dem dargestellten Ausführungsbeispiel wird der Griff 9 in seiner Gebrauchsstellung zusätzlich zum Federschnapper 8 durch einen Formschluss verriegelt, indem er in eine Mulde eines Beschlagelements eintaucht, wobei die Kraftwirkung der Feder 16 die Beibehaltung dieses Formschlusses unterstützt. Dabei befinden sich die beiden Abschnitte 10 und 11 des Griffs 9 nach wie vor in ihrer kürzeren, zusammengeschoben Anordnung. Durch Lösen des Riegelbolzens 12 können die beiden Abschnitte 10 und 11 nun auseinandergezogen werden und der Griff auf seine größere Länge gebracht werden, in der er möglichst weit über den Ladeboden nach oben ragt.

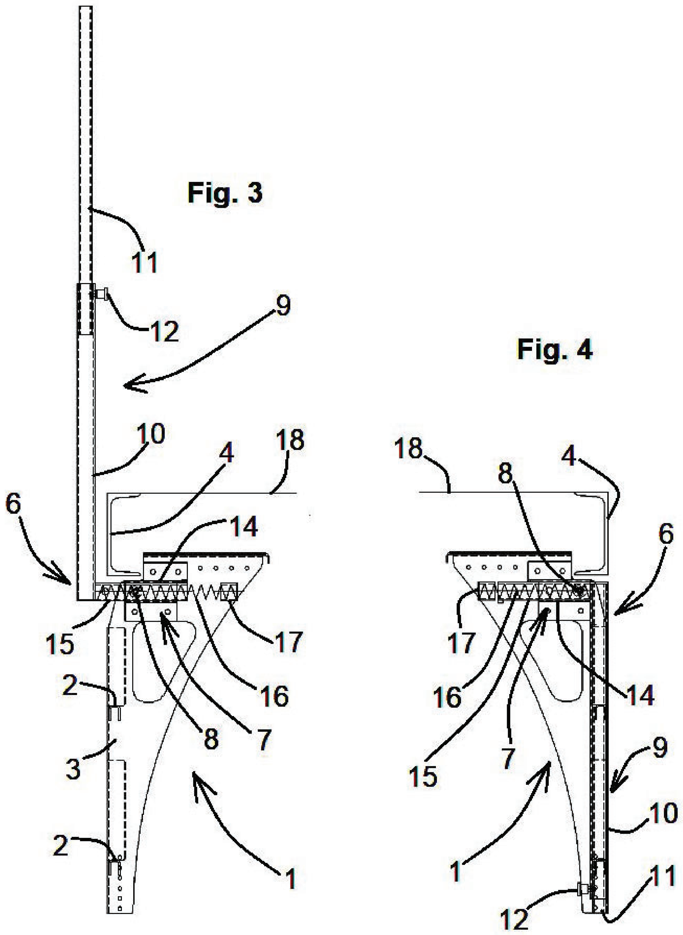

Fig. 3 zeigt eine Ansicht in Längsrichtung des Außenrahmens 4, entsprechend einer Blickrichtung von rechts nach links in Fig. 1 auf die Leiter 1 mit der in ihrer Gebrauchsstellung befindlichen Aufstiegshilfe 6. Dabei ist erkennbar, dass bündig mit der Oberkante des Außenrahmens 4 ein Ladeboden 18 an den Außenrahmen 4 anschließt. Weiterhin ist erkennbar, dass die Riegelbolzen 12 des Griffs 9 konstruktiv genauso ausgestaltet sind wie die Federschnapper 8 des Schwenklagers 7. Schließlich ist in Fig. 3 erkennbar, dass der Griff 9 im Abstand seitlich außerhalb des Außenrahmens verläuft, nämlich im Abstand von dem Außenrahmen 4. Aufgrund der geradlinig stangenförmigen Ausgestaltung des Griffs 9 verläuft im dargestellten Ausführungsbeispiel der Griff 9 auf seiner gesamten Länge außerhalb des Außenrahmens und somit nicht über dem Ladeboden, so dass die gesamte Ladefläche des Fahrzeuganhängers begangen oder befahren werden kann oder zur Aufnahme von Ladung genutzt werden kann.

Fig. 4 zeigt eine Ansicht in Längsrichtung des Außenrahmens 4, entsprechend einer Blickrichtung von links nach rechts in Fig. 1 auf die Leiter 1 mit der in ihrer Ruhestellung befindlichen Aufstiegshilfe 6. Der Griff 9 befindet sich bündig unter dem Außenrahmen 4, ragt also nicht über die Abmessungen des Außenrahmens hinaus nach außen. Die beiden Abschnitte 10 und 11 des Griffs 9 sind ineinandergeschoben und mittels des Riegelbolzens 12 in dieser Anordnung verriegelt. Der Abstand zwischen der längeren Hülse 15 und dem Hülsenboden 17 ist im Vergleich zur Gebrauchsstellung der Aufstiegshilfe 6 geringer.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Leiter
- 2: Sprosse
- 3: Holm
- 4: Außenrahmen
- 5: Traverse
- 6: Aufstiegshilfe
- 7: Schwenklager
- 8: Federschnapper
- 9: Griff
- 10: äußerer Abschnitt
- 11: innerer Abschnitt
- 12: Riegelbolzen
- 13: Bohrung
- 14: Gehäuse
- 15: längere Hülse
- 16: Feder
- 17: Hülsenboden
- 18: Ladeboden

## Patentansprüche

1. Fahrzeuganhänger,
mit einem Ladeboden (18)
sowie mit einer Leiter (1), die tiefer als der Ladeboden (18) an einem Randabschnitt des Ladebodens (18) angeordnet ist,
**dadurch gekennzeichnet,**
**dass** die Leiter (1) eine bewegliche Aufstiegshilfe (6) aufweist, wobei die Aufstiegshilfe (6) einen Griff (9) aufweist, der zwischen einer Ruhestellung unterhalb des Ladebodens (18) und einer über den Ladeboden (18) hinaus nach oben ragenden Gebrauchsstellung um eine Schwenkachse beweglich ist,
und die Schwenkachse im Wesentlichen quer zu dem Randabschnitt des Ladebodens (18) verläuft.

2. Fahrzeuganhänger nach Anspruch 1,
**dadurch gekennzeichnet,**
**dass** die Aufstiegshilfe (6) in ihrer Gebrauchsstellung verriegelbar ist.

3. Fahrzeuganhänger nach Anspruch 1 oder 2,
**dadurch gekennzeichnet,**
**dass** der Griff (9) stangenförmig ausgestaltet ist.

4. Fahrzeuganhänger nach einem der vorhergehenden Ansprüche,
**dadurch gekennzeichnet,**
**dass** der Griff (9) zwei Abschnitte (10, 11) aufweist, die zwischen einer ersten, kürzeren Anordnung und einer im Vergleich dazu längeren, zweiten Anordnung relativ zueinander beweglich sind.

5. Fahrzeuganhänger nach Anspruch 4,
**dadurch gekennzeichnet,**
**dass** der Griff (9) teleskopierbar in der Art ausgestaltet ist, dass die beiden Abschnitte (10, 11) zwischen einer ineinandergeschobenen, ersten Anordnung und einer im Vergleich dazu längeren, auseinandergezogenen Anordnung beweglich sind.

6. Fahrzeuganhänger nach einem der vorhergehenden Ansprüche,
**dadurch gekennzeichnet,**
**dass** die Aufstiegshilfe (6) auch in ihrer Ruhestellung verriegelbar ist.

7. Fahrzeuganhänger nach einem der vorhergehenden Ansprüche,
**dadurch gekennzeichnet,**
**dass** die Aufstiegshilfe (6) in Längsrichtung ihrer Schwenkachse beweglich ist und dazu eingerichtet ist,
in Ihrer Ruhestellung unterhalb des Ladebodens (18) angeordnet zu sein und in ihrer Gebrauchsstellung außerhalb des Ladebodens (18) nach oben zu verlaufen.

8. Fahrzeuganhänger nach einem der vorhergehenden Ansprüche,
**dadurch gekennzeichnet,**
**dass** beiderseits der Leiter (1) jeweils eine Aufstiegshilfe (6) angeordnet ist.

9. Fahrzeuganhänger nach einem der vorhergehenden Ansprüche,
**dadurch gekennzeichnet,**
**dass** der Griff (9) in eine nach unten hängende Ruhestellung beweglich ist.
